# EUROPÄISCHE PATENTANMELDUNG

(11) **EP 1 243 863 A2**
(43) Veröffentlichungstag der Anmeldung: **25.09.2002**
(21) Anmeldenummer: 02003392.4
(22) Anmeldetag: 14.02.2002
(51) Int. Cl.: F24D 11/02, F24D 5/10

(54) **Verfahren zum Führen von Aussenluft in einer Gebäudehülle und in einem Gebäude sowie ein Verfahren zum Temperieren eines Gebäudes**

(30) Priorität: 21.03.2001 DE 10113896
(71) Anmelder: Schmitz, Johannes, Dr.-Ing., D-52428 Jülich (DE)
(72) Erfinder: Schmitz, Johannes, Dr.-Ing., D-52428 Jülich (DE)
(74) Vertreter: Castell, Klaus, Dr.-Ing.

(57) **Zusammenfassung**

Um Außenluft in einer Gebäudehülle bzw. in einem Gebäude effektiver aufzuwärmen, schlägt die Erfindung ein Verfahren zum Führen von Außenluft in einer Gebäudehülle und in einem Gebäude vor, wobei im Bereich der Gebäudehülle ein innerer Spalt von einem äußeren Spalt durch eine permeable Schicht separiert wird. In den äußeren Spalt fällt Außenluft ein, wobei die Außenluft durch die permeable Schicht in einen inneren Spalt gelangt und dort in einen oberen Bereich der Gebäudehülle aufsteigt und/oder zumindest teilweise in einen unteren Bereich der Gebäudehülle sinkt, wobei die in den unteren Bereich der Gebäudehülle gesunkene Außenluft in den Dachbereich des Gebäudes geführt wird, bevor sie daim einer Wärmepumpe zugeführt wird.

## Beschreibung

Die Erfindung betrifft ein Verfahren zum Führen von Außenluft in einer Gebäudehülle und in einem Gebäude sowie ein Verfahren zum Temperieren eines Gebäudes, wobei im Bereich der Gebäudehülle ein innerer Spalt von einem äußeren Spalt durch eine permeable Schicht separiert wird, und in den äußeren Spalt Außenluft einfällt, wobei die Außenluft durch die permeable Schicht in den inneren Spalt gelangt und dort in einen oberen Bereich der Gebäudehülle aufsteigt und/oder zumindest teilweise in einen unteren Bereich der Gebäudehülle sinkt.

Um Außenluft in einer Gebäudehülle oder in einem Gebäude zu führen, sind bisher eine Vielzahl von technischen Lösungen vorgeschlagen worden. Beispielsweise wird in der Offenlegungsschrift DE 31 03 549 A1 eine Führung von Außenluft beschrieben, die über eine Vielzahl von Spalten zwischen einer Gebäudewand und einer Fassade bzw. zwischen einer Dachschalung und einer Dachabdeckung des Gebäudes gefördert wird. Hierbei wird die Außenluft aus der Bodennähe von unten mittels eines Gebläses angesaugt und einem Verdampfer im Dachbereich zugeführt.

Wie aus der Beschreibung dieser Offenlegungsschrift zu entnehmen ist, wird der Außenluft jedoch nur ein begrenztes Potential an Wärmeenergie des Gebäudes, insbesondere der Gebäudehülle des Gebäudes, zugeführt. Bedingt durch die doch relativ kurze Kontaktdauer der Außenluft mit dem Gebäude, unter anderem beschränkt durch die Gebäudehöhe, erwärmt sich die Außenluft auch nur im Rahmen dieses Kontaktzeitraumes. Eine weitere Erwärmung der Außenluft durch eine weiterreichende Führung ist hierbei nicht vorgesehen. Stattdessen wird die bedingt erwärmte Außenluft direkt einem Verdampfer einer Wärmepumpe zugeführt und entwärmt.

So gibt es noch eine Vielzahl an Beispielen von Verfahren, bei denen die Außenluft von unten angesaugt wird. Nachteilig ist hierbei, dass die Außenluft lediglich ein einziges Mal die Höhe des Gebäudes und damit auch nur einmal die potentielle Wärmestrahlung des Gebäudes nutzt. Die Wärmeaufnahme der Außenluft beschränkt sich hierbei lediglich auf die Wegstrecke von dem Erdbereich bis zu dem Dach bzw. bis zu der Dachspitze.

Eine Weiterentwicklung der vorhergehend beschriebenen Verfahren zur Außenluftführung in einem Gebäude, wird in der EP 0 236 704 A2 beschrieben. Hierbei weist die Gebäudehülle eines Gebäudes einen äußeren sowie einen inneren Spalt auf. In dem äußeren Spalt fällt aus einem oberen Bereich Außenluft ein und dringt durch eine den äußeren Spalt und den inneren Spalt begrenzende Wärmedämmschicht in den inneren Spalt ein. Der innere Spalt ist hierbei aktiv unter einem Unterdruck gehalten, wobei die warme Luft nach unten gesaugt wird. Auch bei dieser Art der Außenluftführung konnte nicht vermieden werden, dass bei einer länger anhaltenden Kälteperiode die Außenluft zusätzlich durch eine Heizeinrichtung aufgewärmt werden musste, bevor sie einem Wärmetauscher einer Wärmepumpe zugeführt wurde.

Es ist nun Aufgabe der Erfindung, die Führung von Außenluft in einem Gebäude und/oder in einer Gebäudehülle derart weiterzuentwickeln, dass sich die Außenluft effektiver erwärmt.

Die der Erfindung zugrunde liegende Aufgabe wird mit einem Verfahren zum Führen von Außenluft in einer Gebäudehülle und in einem Gebäude gelöst, wobei im Bereich der Gebäudehülle ein innerer Spalt von einem äußeren Spalt durch eine permeable Schicht separiert wird und in den äußeren Spalt Außenluft einfällt. Hierbei gelangt die Außenluft durch die permeable Schicht in den inneren Spalt, in der sie in einen oberen Bereich der Gebäudehülle aufsteigt und/oder zumindest teilweise in einen unteren Bereich der Gebäudehülle sinkt, wobei die in den unteren Bereich gesunkene Luft in den Dachbereich des Gebäudes geführt wird, bevor sie dann einer Wärmepumpe zugeführt wird.

Besonders vorteilhaft ist es, dass der innere Spalt innerhalb einer Wärmedämmung verläuft. Die Wärmedämmung ist vorteilhafter Weise als zweischaliges Dämmelement ausgestaltet, welches insbesondere einen Wännedämm-Wännertauscher darstellt. Der Wärmedämm-Wärmetauscher hat zwischen den zwei Dämmelementen einen Luftspalt. Hierbei nimmt die Luft, vorzugsweise die Außenluft, Transmissionswärme von der Wärmedämmung auf. Günstig ist es, dass die Außenluft nicht direkt in Kontakt mit einem Mauerwerk des Gebäudes steht, so dass der Außenluft durch das Mauerwerk keinerlei Wärme entzogen wird. Bevorzugt kommt der Wärmedämm-Wännetauscher entlang der Gebäudehülle zum Einsatz.

Mittels der inneren Spalte gelangt die Außenluft in günstige Bereiche, in denen die Außenluft vorteilhaft aufgewärmt wird. Beispielsweise wird die Außenluft durch die Aufnahme von Transmissionswärme aus dem Wärmedämmstoff aufgewärmt.

Zur Temperaturerhöhung wird auch die niedrige volumenspezifische Wärmekapazität der Gasphase der Außenluft im Vergleich zu der höheren volumenspezifischen Wärmekapazität des Wärmedämm-Wärmetauschauer-Materials genutzt. Erfindungsgemäß wird diese Tatsache auch zur Wärmerückgewinnung für ein Temperierungssystem des Gebäudes genutzt.

Unter einer Gebäudehülle versteht man hierbei alle das Gebäude umschließenden Bereiche wie beispielsweise das Dach, die Außenwände, einschließlich der sich im Erdreich befindlichen Außenwände sowie das Fundament des Gebäudes.

Es wurde überraschenderweise gefunden, dass durch eine derartige Führung die Außenluft so erwärmt wird, dass die Außenluft selbst bei einer lange anhaltenden Kälteperiode nicht zusätzlich durch eine Heizeinrichtung erwärmt werden muss, um ein genügend hohes Temperaturniveau zu erreichen, mit dem eine Wärmepumpe sinnvoll betrieben werden kann.

Somit wird erstmals das Betreiben einer Wärmepumpe lediglich mit regenerativen Energien möglich. Das erfindungsgemäße Verfahren zum Führen von Außenluft ermöglicht erstmals einen monovalenten Betrieb einer Wärmepumpe in einem Gebäude.

Vorteilhaft ist es hierbei, dass die durch den unteren Bereich des Gebäudes in den oberen Bereich des Gebäudes geführte Außenluft erfindungsgemäß weit mehr als den doppelten Weg durch das Gebäude zurücklegt als die unmittelbar durch den inneren Spalt in den Dachbereich geführte Außenluft.

Durch die erfindungsgemäße Führung hat sich die Außenluft derart erwärmt, dass sie nun genügend Energie aufweist, um beispielsweise einer Wärmepumpe zugeführt zu werden ohne mittels einer weiteren Heizeinrichtung energetisch auf ein höheres Niveau gebracht zu werden.

Ein weiterer großer Vorteil ist es, dass die bis in den Dachbereich gelangte Außenluft ohne eine Strömungsmaschine oder eine sonstige Einrichtung, welche im Stande ist Luft zu beschleunigen, in Bewegung versetzt wird. Erfindungsgemäß zirkuliert die Außenluft selbstregelnd durch die Gebäudehülle und durch das Gebäude.

Besonders vorteilhaft ist es, dass die im Bereich des Daches, insbesondere unter dem First angereicherte aufgewärmte Außenluft auf ihrem Weg durch die bisher durchströmte Gebäudehülle und ihrem Weg durch das bisher durchströmte Gebäude stetig und immerwährend aufgewärmt wird. Hierbei hat die derart geführte Außenluft vorzugsweise in keiner Phase Wärmeenergie abgegeben, sondern vielmehr kontinuierlich Wärmeenergie aufgenommen. Dadurch findet eine immer fortschreitende Erhöhung des Energieniveaus der Außenluft statt. Eine Wärmeenergieabgabe findet erstmals durch einen Wärmetauscher der Wärmepumpe statt.

Es ist hierbei nicht nur möglich, dass die Wärmepumpe zur Gewinnung von Wärmeenergie für ein Gebäude mit der erwärmten Außenluft betrieben wird, sondern es ist ebenfalls möglich, dass aus der Energie der Außenluft elektrische Energie gewonnen wird.

Des weiteren ist es vorteilhaft, wenn die eingeleitete Außenluft beispielsweise unter einer Dachschräge des Gebäudes geführt wird. Hierbei nimmt die Dachschräge wegen ihrer vorteilhaften Winkelstellung gegenüber der Sonne tagsüber eine besondere große Menge an Sonnenenergie auf, insbesondere auch dann, wenn die Dachschräge zur Südseite angeordnet ist, sodass sich die daran entlang strömende Außenluft besonders vorteilhaft aufwärmt. Um die Sonneneinstrahlung wesentlich besser auszunutzen, ist es von Vorteil, wenn an der Dachschräge Sonnenkollektoren angeordnet sind. Mit deren Zuhilfenahme kann die Außenluft zusätzlich oder ausschließlich erwärmt werden. Auch eine besonders lichtdurchlässige Außenhaut des Daches kann sich im Bereich der Außenluftführung vorteilhaft auf deren Erwärmung auswirken. Beispielsweise ist die Außenhaut des Daches durch eine transparente Wärmedämmung realisiert, sodass zwar sehr viel Sonnenstrahlung durch die Außenhaut eindringt, aber nur wenig Sonnenenergie, beispielsweise durch Reflektion, wieder entweicht.

Auch das Führen der Außenluft entlang der Gebäudehülle im Bereich einer Außenwand, insbesondere in dem inneren Spalt, welcher innerhalb der Wärmedämmschicht der Gebäudehülle des Gebäudes verläuft, wirkt sich positiv auf die Erwärmung der Außenluft aus. Es ist hierbei besonders vorteilhaft, dass die Transmissionswärme des Mauerwerks sowie der Wärmedämmschicht unmittelbar von der dem inneren Spalt durchströmenden Außenluft aufgenommen wird und so nicht ungenutzt an die Umwelt abgegeben wird. Die Wännetransmission aus dem Gebäudeinneren erlaubt es, die in der Wärmedämmschicht strömende Außenluft gut zu erwärmen.

Es versteht sich, dass als eine von der Außenluft durchströmte Fläche der gesamte Außenmauerbereich des Gebäudes genutzt werden kann oder nur Teile des Außenmauernbereiches, wobei die Außenluft beispielsweise durch Kanäle in der Gebäudehülle geführt wird.

Es versteht sich weiter, dass die Außenluft auch nur durch besonders sonnenenergiereiche Flächen der Gebäudehülle geführt werden kann, falls dies zu einer positiveren Wärmebilanz führt. Beispielsweise wird dies durch die Strömungsgeschwindigkeit der Außenluft und/oder durch den Durchmesser der Strömungskanäle gesteuert.

Es ist vorteilhaft, wenn das Volumen der aufzuwärmenden Außenluft so gewählt wird, dass genügend Wärme aus dem umbauten Raum, welcher von der Außenluft durchströmt wird, während des Durchströmungszeitraums aufgenommen wird.

Es ist möglich, dass die Strömungsgeschwindigkeit und das Luftvolumen der Außenluft durch entsprechende Stellmechanismen eingestellt und geleitet werden, sodass beispielsweise durch die Sonneneinstrahlung intensiv erwärmte Flächen der Gebäudehülle bevorzugt mit Außenluft durchströmt werden, wobei beispielsweise Flächen der Gebäudehülle auf der Schattenseite weniger stark bzw. temporär gar nicht von der Außenluft durchströmt werden. Durch eine solche Führung der Außenluft durch die Gebäudehülle kann sich die Wärmebilanz der Außenluft wesentlich verbessern. Hierbei ist die Gebäudehülle beispielsweise mit Sensoren versehen, welche die einzelnen Temperaturniveaus der Flächen ermitteln und die Außenluft entsprechend durch die Gebäudehülle leiten. Es versteht sich, dass eine Verstellung der Luftrührung automatisch nach den ermittelten Werten durchgeführt werden kann.

Es ist weiter nach der Erfindung vorgeschlagen, dass die in den oberen Bereich der Gebäudehülle aufgestiegene Außenluft aus dem inneren Spalt heraus in einen oberen Bereich des Daches des Gebäudes, vorzugsweise in einen Bereich unmittelbar unter dem First des Daches, übergeht. Vorteilhafterweise geht die erwärmte Außenluft aus dem inneren Spalt der Gebäudehülle über Konstruktionsspalte und/oder über konstruierte Öffnungen in diesen Bereich über.

Eine weitere Ausführungsvariante sieht vor, dass ein Teil der Außenluft durch die Massen der Kelleraußenwände sowie durch das Erdreich, vorzugsweise durch das Erdreich unter dem Gebäudefundament geführt wird.

Hierbei ist es besonders vorteilhaft, dass die massiven Massen des Gebäudes zur Erwärmung der Außenluft genutzt werden. Vorzugsweise wird der Teil der Außenluft durch die Massen der Kelleraußenwände und durch das Erdreich unter dem Gebäudefundament geführt, welcher wegen mangelnder Temperatur keinen genügend großen Auftrieb hat, um in dem inneren Spalt des Wärmedämm-Wärmetauschers in den oberen Bereich der Gebäudehülle aufzusteigen. Dieser Teil der Außenluft erhält nunmehr die Möglichkeit, Wärme aus den Massen der Kelleraußenwände und des Erdreiches aufzunehmen.

Da das Erdreich ebenfalls einen hervorragenden Wärmespeicher darstellt, werden, wie oben schon erwähnt, nicht nur die oberirdisch liegende und unterirdisch liegende Gebäudehülle sowie die Gebäudemassen des Gebäudes zur Erwärmung der Außenluft genutzt, sondern auch der das Gebäude ummantelnde Erdbereich, insbesondere auch das Erdreich unter der Kellersohle.

Da insbesondere die Masse eines Gebäudes einen hervorragenden Wärmespeicher darstellt, ist es besonders vorteilhaft, durch diesen Wärmespeicher wenigstens einen Teil der Außenluft zu führen, sodass der Außenluft weitere Wärmeenergie zugeführt wird.

Insbesondere bei Altbauten ist es vorteilhaft, wenn wenigstens ein Teil der Außenluft durch die Kellerräume geführt wird. Beispielsweise bei der Sanierung von Altbauten ergibt sich oft das Problem, dass die für das erfindungsgemäße Verfahren notwendigen Rohre für die Außenluftführung durch die Kelleraußenwände und für die Führung unter der Kellersohle meist gar nicht oder nur mit einem sehr hohen Aufwand installiert werden können. Um die ernormen Kosten einer solchen Installation zu vermeiden, ist es günstig, die Außenluft hierbei dann erfindungsgemäß durch die Kellerräume zu führen. Es ist vorteilhaft, wenn zur besseren Isolierung der Kellerräume, vorzugsweise die Kellerdecken mit einer Wärmedämmschicht isoliert werden. Insbesondere kann die Außenluft dann auch in einem Spalt zwischen der Kellerdecke und der Wärmedämmschicht geführt werden. Falls es erforderlich ist, ist es vorteilhaft, wenn die Außenluft, welche durch die Kellerräume geführt wird, durch einen Wärmetauscher geleitet wird. Dies ist vorzugsweise ein Luft-Wasser-Wännetauscher und beispielsweise in einem kondensatorseitigen Kreislauf der Wärmepumpe angeordnet. Mit diesem Wärmetauscher wird beispielsweise nicht genutzte Restwärme aus einem Wasserkreislauf eines Temperierungssystems des Gebäudes an die durch die Kellerräume geführte Außenluft übertragen.

Vorteilhaft ist hierbei, dass die nicht weiter durch das Temperierungssystem des Gebäudes zu nutzende Wärme der Außenluft zu geführt wird, so dass sich die Außenluft hierbei weiter erwärmt.

Es versteht sich, dass sich die vorhergehend beschriebene Luftführung durch die Kellerräume eines Gebäudes nicht nur auf Altbauten beschränkt. Vielmehr ist diese Art der Luftführung in jedem Gebäude zusätzlich oder auch ausschließlich zu gebrauchen.

Es ist in der Regel von Vorteil, wenn die durch die Kellerräume geführte Außenluft in Räume des Gebäudes, vorzugsweise in oberirdischen Räume des Gebäudes, geführt wird. Durch eine derartige Außenluftführung gelangt zusätzlich frische, aber erwärmte Außenluft in die einzelnen Räume des Gebäudes. Diese Außenluft trägt unter anderem erheblich zu einer Verbesserung des Raumklimas bei. Sollte beispielsweise eine direkte Zuführung der erwärmten Außenluft im Sinne einer Luftheizung nicht unmittelbar notwendig sein, etwa da der Raum schon genügend erwärmt ist, ist es möglich, die durch die Kellerräume und den Wärmetauscher des Temperierungssystem geführte Außenluft unmittelbar in den oberen Bereich des Gebäudes zu führen. Hier kann sich die Außenluft mit ebenfalls erwärmter Luft weiter vermischen.

Es versteht sich, dass auch diese beschriebene Art der Luftführung bei einem Gebäudeneubau von Vorteil ist. Je nach Anwendungsfall ist es sinnvoll, nicht nur bei sanierten Altbauten Außenluft durch die Kellerräume zu führen, sondern auch bei Neubauten. Beispielsweise wird bei einem Neubau ein Teil der zu erwärmenden Außenluft zur Erhöhung der Frischluftanteils in die einzelnen Räumen des Gebäudes auf vorhergehend beschriebene Weise durch die Kellerräume geführt und mittels des Wärmetauschers zusätzlich erwärmt.

Es ist ebenfalls möglich, dass die Außenluftführung über die Kellerräume eines Gebäudes beispielsweise ausschließlich im Lichte einer Raumbelüftung genutzt wird, bei welcher nicht primär die Erwärmung der Raumluft erreicht werden soll, sondern hauptsächlich eine Verbesserung der Raumluftqualität. Dies trifft auf jegliche Art von Gebäuden zu, insbesondere auch auf Neu- bzw. Altbauten.

Vorteilhaft ist es, wenn der Teil der Außenluft, welcher durch das Erdreich geführt wird, in einem Bereich wieder zusammengeführt wird. Durch das teilweise Aufsplitten der den unteren Bereich der Gebäudehülle durchströmenden Außenluft werden vorteilhaft die Massen der Gebäudeaußenmauern als guter Wärmespeicher zur Erwärmung der Außenluft genutzt. Es ist ebenfalls möglich, dass je nach Anwendungsfall die zu erwärmende Außenluft nur durch das Erdreich bzw. nur durch den Grenzbereich Erdreich/Gebäudehülle oder nur durch die Massen der Kellerwände und/oder durch die Massen der Kellersohle geführt wird.

Beispielsweise kann die zu erwärmende Außenluft bis zur Kellersohle geführt werden bzw. unter der Kellersohle hindurch geführt werden und anschließend zusätzlich noch durch die Massen der Kellersohle und/oder durch die Massen der Kellerwände geführt werden.

Der Bereich, in dem der Teil der Außenluft, welcher durch die Kellermassen und durch das Erdreich geführt wird, zusammen geführt wird, befindet sich vorzugsweise nahe der Kellersohle.

In diesem Bereich kann die Außenluft entweder gesammelt werden und sich weiter erwärmen, sodass dann nach und nach die am stärksten erwärmte Luft, beispielsweise durch einen Schacht, nach oben steigt. Oder die wieder vereinte Außenluft steigt ohne sich zu sammeln unmittelbar nach dem Zusammentreffen in den oberen Bereich des Gebäudes auf.

Eine besonders bevorzugte Verfahrensvariante sieht vor, dass die aus dem unteren Bereich der Gebäudehülle in den oberen Bereich des Gebäudes geführte Außenluft mit der in dem inneren Spalt der Gebäudehülle aufgestiegenen Außenluft in dem Dachbereich des Gebäudes vermischt wird. Die in dem Kellerbereich angelangte Außenluft wird hierbei beispielsweise durch einen Schacht, welcher sich im Gebäudeinneren befindet, bis vorzugsweise in den Firstbereich des Gebäudes geführt. Dabei erwärmt sich die aufsteigende Außenluft durch die im Inneren des Gebäudes gespeicherte Wärmeenergie weiter auf.

Überraschenderweise ermöglicht das erfindungsgemäße Verfahren ein Führen von sich erwärmender Außenluft auf solch eine Weise, dass die sich erwärmende Außenluft, ohne etwa von einer Strömungsmaschine bewegt zu werden, sich in der Gebäudehülle selbsttätig bewegt. Bei herkömmlichen Führungen von Außenluft bewegte sich die sich erwärmende Außenluft immer nur dann ausreichend und in gewünschter Weise, wenn sie zusätzlich mittels einer Strömungsmaschine angetrieben wurde.

Eine weitere Verfahrensvariante sieht vor, dass Abluft aus den Räumen des Gebäudes in den Dachbereich, insbesondere in den Firstbereich des Daches, geführt wird. Die Abluft wird beispielsweise aus beheizten und/oder aufgeheizten Räumen durch entsprechende Öffnungen entnommen und vorzugsweise mittels eines Zentralabluftkanals in den Dachbereich des Gebäudes geführt. Die Räume sind hierbei beispielsweise durch eine Heizungsanlage des Gebäudes und/oder durch die Wärmeabgabe der Bewohner und/oder durch die Sonnenenergie, welche beispielsweise durch die Fenster bzw. durch die Türen des Gebäudes einfällt, entsprechend aufgeheizt. Insbesondere auch die den Räumen des Gebäudes durch die Kellerräume und dem Wärmetauscher zugeführte Außenluft wird als Abluft in den Dachbereich des Gebäudes geführt.

Um das Herausströmen der Abluft aus den einzelnen Räumen zu verstärken, kann es sinnvoll sein, beispielsweise im Bereich des Zentralabluftkanals einen Ventilator anzuordnen, welcher die Abluft vorteilhaft aus den Räumen des Gebäudes heraus beschleunigt.

Der Ventilator eignet sich beispielsweise ebenfalls hervorragend zur Belüftung der Räume, auch wenn das Abführen von Abwärme aus den Räumen primär nicht gefordert ist.

Besonders vorteilhaft ist es, wenn die aus wenigstens einem Raum des Gebäudes abgeleitete Abluft mit der in dem inneren Spalt nach oben aufgestiegenen Außenluft und/oder mit der aus dem unteren Bereich der Gebäudehülle in den oberen Bereich des Gebäudes geführten Außenluft in dem Dachbereich des Gebäudes vermischt wird. Durch die hinzugemischte Abluft aus den Räumen des Gebäudes erfährt die Außenluft eine weitere Temperaturerhöhung. Dies geschieht vorzugsweise im Firstbereich des Daches, in dem beispielsweise beide Kanäle, wie etwa der Außenluftschacht aus dem Kellerbereich als auch der Zentralabluftkanal, in einem Raum zusammengeführt sind.

Falls es erwünscht ist oder technisch erforderlich ist, kann der erwärmten Außenluft sowie der Abluft auch direkt durch eine weitere Öffnung, welche vorzugsweise im Dachbereich angeordnet ist, frische Außenluft hinzugeführt werden. Diese ist vorzugsweise vorher nicht durch die Gebäudehülle bzw. durch das Gebäudeinnere geführt worden.

Die vermischte Luft, bestehend aus der erwärmten Außenluft aus dem inneren Spalt sowie aus dem Kellerbereich und der Abluft aus den Räumen des Gebäudes, kann in dem Firstbereich gesammelt werden und je nach Bedarf von dort abgerufen werden. Vorzugsweise wird sie direkt weitergeführt.

Eine ergänzende Verfahrensvariante sieht vor, dass die vermischte Luft verdampferseitig von einer Wärmepumpe aus dem Dachbereich abgesaugt wird. Dadurch dass die erwärmte Außenluft unmittelbar aus dem Dachbereich von der Wärmepumpe abgesaugt wird, ist eine zusätzliche Saugeinrichtung, welche der Wärmepumpe die erwärmte Luft zuführt, nicht mehr notwendig. Vielmehr bezieht die Wärmepumpe je nach Bedarf genügend erwärmte Luft zum Entwärmen aus diesem Reservoir, so dass die Wärmepumpe jederzeit einsatzbereit ist.

Besonders vorteilhaft ist es, wenn sich 70 %, vorzugsweise mehr als 90 %, der durch die Wärmepumpe zu entwärmenden Luft aus durch die Gebäudehülle geführter Außenluft zusammensetzt. Die Wärmepumpe ist hierbei vorzugsweise in dem Kellerbereich des Gebäudes angeordnet, sodass die vorzugsweise mit Abluft angereicherte Außenluft nochmals einen Weg durch das Gebäudeinnere durchläuft, wobei sie eine weitere Temperaturerhöhung erfahren kann. Die Luft wird hierzu beispielsweise durch eine Strömungsmaschine der Wärmepumpe angesaugt. Die der Wärmepumpe zugeführte Außenluft und/oder zugeführte Abluft wird mittels eines Wärmetauschers entwärmt, sodass hierbei beispielsweise ein Kältemittel der Wärmepumpe verdampft wird.

Eine besonders bevorzugte Verfahrensvariante sieht vor, dass die so entwärmte Luft vorzugsweise vollständig aus dem Gebäude geführt wird. Besonders vorteilhaft ist es, die durch die Wärmepumpe entwärmte Luft vollständig aus dem verdampferseitigen Luftkreislauf, welcher die Gebäudehülle bzw. das Gebäude durchströmt, zu entnehmen. Bisher wurden wenigstens Teile der entwärmten Luft diesem Luftkreislauf wieder zugeführt, um die noch Restenergie aufweisende Luft, beispielsweise bei besonders widrigen Umweltbedingungen, dem durch eine Lufthülle umschlossenen Gebäude wenigstens teilweise wieder zuzuführen. Hierbei wurde die zuvor aufgewärmte Luft nur so weit entwärmt, dass eine Rückführung der entwärmten Luft in den Luftkreislauf sinnvoll ist.

Es versteht sich, dass je nach Anwendungsfall auch weiterhin entwärmte Luft in Teilen in das Gebäude zurückgeführt werden kann und die entwärmte Luft nicht zwangsläufig aus dem Gebäudeinneren geführt werden muss.

Selbst bei einer lange andauernden Kälteperiode, ist es möglich, die vorher aufgewärmte Außenluft sowie die Abluft komplett als entwärmte Luft aus dem Gebäude herauszuleiten.

Es versteht sich, dass die der aufgewärmten Luft entzogene Wärmeenergie energetisch aufgewertet wird. Hierzu wird die der aufgewärmten Luft entzogene Wärmeenergie unter anderem einem möglichst großflächigen Temperierungssystem zugeführt, insbesondere einem Temperierungssystem aus Rohren, welche vorzugsweise in den Fußböden und Decken des Gebäudes angeordnet sind. Hierbei ist es besonders vorteilhaft, wenn das Verhältnis von der Oberfläche Rohr zu dem Volumen Rohr möglichst groß gewählt ist.

Die Aufgabe wird ferner durch ein Gebäude mit einer Wärmepumpe gelöst, wobei die Wärmepumpe zur Aufnahme von erwärmter Außenluft verdampferseitig eine Öffnung aufweist, und die verdampferseitige Öffnung in der Nähe eines Mischbereichs angeordnet ist, wobei dieser im Dachbereich des Gebäudes angeordnet ist. Ein derartig konstruiertes Gebäude ermöglicht es, nicht ausreichend warme Außenluft in einem möglichst langen Weg durch die Gebäudehülle und/oder durch das Gebäude zu führen. Vorteilhaft hierbei ist es, dass für die Bewegung der Außenluft in der Führung keine gesonderte Strömungsmaschine eingesetzt werden muss, was sich wiederum positiv auf die Energiebilanz des Gebäudes auswirkt. Durch die erfindungsgemäße Führung nimmt die Außenluft besonders viel Wärmeenergie auf, wodurch die Effizienz beispielsweise eines Energiespeicherhauses, insbesondere der Wärmepumpe eines Energiespeicherhauses, erhöht wird.

Es ist nach der Erfindung vorgeschlagen, dass es vorteilhaft ist, wenn die Wärmepumpe in dem Kellerbereich des Gebäudes angeordnet ist. Hierbei durchströmt die der Wärmepumpe zuzuführende Luft noch einmal das Gebäude von oben nach unten.

Besonders vorteilhaft wirkt sich die Verwendung einer Wärmepumpe in einem Gebäude mit einer Gebäudehülle zum Entwärmen von Außenluft aus, wobei der Wärmepumpe die Außenluft aus dem Dachbereich des Gebäudes zugeführt wird. Gerade die Verwendung einer Wärmepumpe in einem Gebäude mit der erfindungsgemäßen Führung der Außenluft ist besonders vorteilhaft, da der Außenluft ein außergewöhnlich hoher Anteil an Wärmeenergie hinzugeführt wird, ohne dass der Außenluft Wärmeenergie aus einer elektrischen oder einer mit einem fossilen Brennstoff befeuerten Wärmequelle hinzugeführt werden muss. Dies ermöglicht es unter anderem, dass die Wärmepumpe noch effizienter arbeitet als in herkömmlichen Energiespeichergebäuden.

Die der Erfindung zugrunde liegende Aufgabe wird außerdem von einem Verfahren zum Temperieren eines Gebäudes mit einem Temperierungssystem gelöst, welches aus einem Rohrnetzwerk besteht, das vorzugsweise aus Rohren mit einem geringen Innendurchmesser besteht, durch welche eine Flüssigkeit, vorzugsweise Wasser, geführt wird, und mit einer Wärmepumpe, vorzugsweise mit einer Luft-Wasser-Wärmepumpe, wobei die der Wärmepumpe zugeführte Luft, gemäß einem der Patentansprüche 1 bis 12 geführt wird. Überraschender Weise wurde gefunden, dass es mit dem erfindungsgemäßen Verfahren zur Außenluftführung in Verknüpfung mit dem beschriebenen Temperierungssystem gelingt, die Temperaturdifferenz zwischen der Verdampferseite und der Kondensatorseite einer Wärmepumpe derart gering zu halten, dass die Exergie der erwärmten Außenluft ausreicht, um ein an der Kondensatorseite der Wärmepumpe angeschlossenes Temperierungssystem genügend zu erwärmen, so dass hierbei das Gebäude, insbesondere die Raumluft des Gebäudes, ausreichend erwärmt wird.

Hierdurch gelingt es unter anderem, ein Gebäude zu temperieren, ohne dass hierbei zusätzlich eine konventionelle Heizeinrichtung eingesetzt werden muss. Hierbei ist auch die Brauchwassererwärmung mit einbezogen.

Besonders vorteilhaft ist es, dass es das Temperierungsverfahren nicht nur gestattet ein Gebäude zu erwärmen, sondern insbesondere im Sommer, vorzugsweise während der Nacht, speziell den oberirdischen Teil des Gebäudes auch zu entwärmen. Durch das Temperierungsverfahren wird ein Gebäude einerseits besonders energiesparend erwärmt und andererseits bei Bedarf besonders energiesparend entwärmt.

Weitere Vorteile, Ziele und Eigenschaften vorliegender Erfindung werden anhand der Beschreibung anliegender Zeichnungen erläutert, in welcher beispielhaft das erfindungsgemäße Gebäude mit dem erfindungsgemäßen Verfahren dargestellt ist.

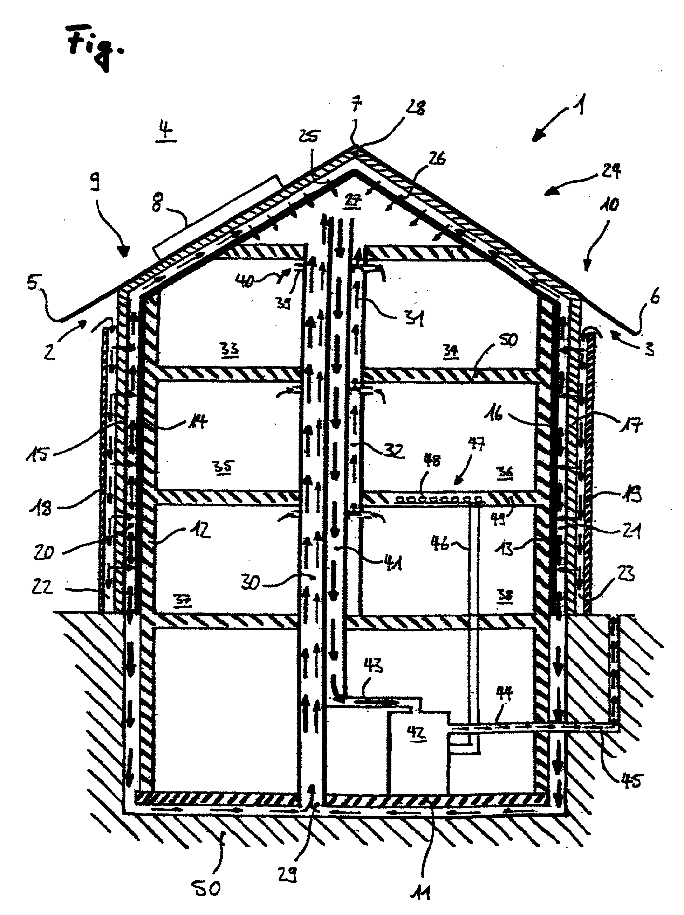

In der Zeichnung zeigt
- die Figur: einen schematischen Schnitt durch ein Energiespeicherhaus.

Bei dem Gebäude 1 wird durch die Öffnungen 2 und 3 Außenluft 4 unter den Dachflächen 5 und 6 eines Daches 7 in eine Gebäudehülle eingeleitet. An der Dachfläche 5 des Daches 7 ist zusätzlich ein Sonnenkollektor 8 angeordnet.

Die Gebäudehülle besteht hierbei aus einen Mauerwerk 9 und 10, einer Kellersohle 11 sowie dem Dach 7. Das Mauerwerk 9 bzw. 10 besteht jeweils aus einer Innenmauer 12 bzw. 13, einem Wärmedämm-Wärmetauscher, der jeweils zwei begrenzende Wärmedämmschichten 14 bzw. 15 und 16 bzw. 17 aufweist, sowie einer Fassade 18 bzw. 19. Hierbei hat der Wärmedämm-Wärmetauscher jeweils zwischen den begrenzenden Wärmedämmschichten 14 und 15 sowie 16 und 17 einen inneren Spalt 20 und 21. Zwischen der jeweiligen Wännedämmschicht 15 bzw. 17 der Wärmedämm-Wärmetauscher und der entsprechenden äußeren Fassade 18 bzw. 19 ist jeweils ein äußerer Spalt 22 bzw. 23 vorhanden. Die äußeren Spalte 22 und 23 sind in ihrem jeweiligen oberen Bereich offen und in ihrem jeweiligen unteren Bereich geschlossen.

Die Außenluft 4 gelangt über die Öffnungen 2 und 3 in die äußeren Spalte 22 und 23. Die in den äußeren Spalten 22 und 23 vorhandene Außenluft 4 durchquert jeweils die Wärmedämmschichten 15 und 17 in einer horizontalen Richtung, wobei sie in den inneren Spalt 20 bzw. 21 gelangt. Hierbei wird der Außenluft 4 erste Transmissionswärme des Gebäudes 1 zugeführt. Die so in den inneren Spalt 20 bzw. in den inneren Spalt 21 gelangte Außenluft 4 steigt oder sinkt je nach Temperaturniveau in dem inneren Spalt 20 bzw. 21 in den Dachbereich oder in den Kellerbereich des Gebäudes 1. Hierbei wird die Außenluft 4 durch die Aufnahme weiterer Transmissionswärme aus dem Gebäude 1 stetig aufgewärmt.

Ist die Außenluft 4 nach dem Durchdringen der Wärmedämmschicht 15 bzw. 17 in den inneren Spalten 20 und 21 warm genug, steigt sie bis in einen oberen Bereich 24 der Gebäudehülle auf. Dort gelangt die Außenluft 4 über Konstruktionsspalte bzw. über entsprechend angelegte Öffnungen in Richtung der Pfeile 25 und 26 in einen Mischbereich 27, welcher direkt unter dem First 28 angeordnet ist.

Auf den Weg entlang der Dachfläche 5 in den Dachbereich 24 wird die Außenluft 4 zusätzlich durch einen Sonnenkollektor 8 erwärmt.

Außenluft 4, welche sich in den inneren Spalten 20 und 21 befindet und unmittelbar nach dem Durchdringen der Wärmedämmschichten 15 und 17 kein ausreichendes Wärmeniveau aufweist, um in den oberen Bereich 24 des Daches 7 aufzusteigen, sinkt in den inneren Spalten 20 und 21 in den Kellerbereich des Gebäudes 1. Hierbei wird die Außenluft 4 mittels Rohren im Inneren des Mauerwerks 9 bzw. 10 des Gebäudes 1 sowie unter der Kellersohle 11 im Erdreich 50 geführt.

Hierbei erwärmt sich die Außenluft 4 weiter. Die so geführte Außenluft 4 sammelt sich in einem Bereich 29. In dem Bereich 29 ist die Außenluft 4 derart erwärmt, dass sie durch ihren thermodynamischen Auftrieb nach oben steigt. Hierbei wird die Außenluft 4 durch einen Schacht 30, welcher im Gebäudeinneren angeordnet ist, geführt. Die Außenluft 4 steigt durch den Schacht 30 bis in den Mischbereich 27 des Gebäudes 1 auf. Die in den Mischbereich 27 aufgestiegene Außenluft 4 wird nun durch eine Abluft 31 angereichert. Die Abluft 31 wird hierzu durch einen Zentralabluftkanal 32 aus den beheizten bzw. aufgeheizten Räumen 33, 34, 35, 36, 37 und 38 des Gebäudes 1 entnommen. Hierzu weist der Raum 33 (exemplarisch für alle Räume 34 bis 38) einen zum Zentralabluftkanal 32 führenden Kanal 39 auf, durch den die Abluft 40 des Raumes 33 strömt. Die durch die Abluft 31 angereicherte Außenluft 4 wird nun durch einen weiteren Schacht 41 zu einer Wärmepumpe 42 geführt. Hierzu weist die Wärmepumpe 42 einen Ventilator auf, der die Außenluft 4 aus dem Mischbereich 27 unter dem First 28 durch den Schacht 41 ansaugt. Hierbei wird die Wärmeenergie der angesaugten Luft 43 mittels eines Verdampfers der Wärmepumpe 42 an ein Kühlmittel abgegeben, wodurch die Luft 43 entwärmt wird. Die entwärmte Luft 44 wird durch einen Kanal 45 aus dem Gebäude 1 geführt. Die mittels der Wärmepumpe produzierte Wärme wird hierbei einem Temperierungssystem 46 des Gebäudes 1 zugeführt. Das Temperierungssystem 46 besteht hierbei aus einem großflächigen Rohrnetzwerk 47, welches wiederum aus einzelnen Rohren 48 besteht, die in dem Fußboden 49 bzw. in der Decke 50 angeordnet sind. Hierbei haben die Rohre 48 ein möglichst großes Verhältnis von der Oberfläche zu Volumen. Das großflächige Rohrnetzwerk 47 des Temperierungssystems 46 ist sowohl zur Wärmeabgabe als auch zur Wärmeaufnahme einzusetzen.

Die mittels der Wärmepumpe 42 erzeugte Energie wird ebenfalls für die Brauchwassererwärmung genutzt.

Durch das erfindungsgemäße Verfahren ist ein monovalenter Energiebetrieb des Gebäudes 1 möglich.

## Patentansprüche

1. Verfahren zum Führen von Außenluft (4) in einer Gebäudehülle und in einem Gebäude (1), wobei im Bereich der Gebäudehülle ein innerer Spalt (20, 21) von einem äußeren Spalt (22, 23) durch eine permeable Schicht (15, 17) separiert wird und in den äußeren Spalt (22, 23) Außenluft (4) einfällt, wobei die Außenluft (4) durch die permeable Schicht (15, 17) in den inneren Spalt (20, 21) gelangt und dort in einen oberen Bereich (24) der Gebäudehülle aufsteigt und/oder zumindest teilweise in einen unteren Bereich der Gebäudehülle sinkt, ***dadurch gekennzeichnet, dass*** die in den unteren Bereich gesunkene Außenluft (4) in den Dachbereich (24) des Gebäudes (1) geführt wird, bevor sie dann einer Wärmepumpe (42) zugeführt wird.

2. Verfahren nach Anspruch 1, ***dadurch gekennzeichnet, dass*** die in den oberen Bereich (24) der Gebäudehülle aufsteigende Außenluft (4) aus dem inneren Spalt (20, 21) heraus in einen oberen Bereich (27) des Daches (7) des Gebäudes (1), vorzugsweise in einen Bereich unmittelbar unter dem First (27) des Daches (7), übergeht.

3. Verfahren nach einem der Ansprüche 1 oder 2, ***dadurch gekennzeichnet, dass*** ein Teil der Außenluft (4) durch die Massen der Kelleraußenwände sowie durch das Erdreich (50), vorzugsweise durch das Erdreich (50) unter dem Gebäudefundament (11) geführt wird.

4. Verfahren nach einem der Ansprüche 1 oder 2, ***dadurch gekennzeichnet, dass*** die Außenluft (4) durch die Kellerräume des Gebäudes (1) geführt wird.

5. Verfahren nach Anspruch 4, ***dadurch gekennzeichnet, dass*** die durch die Kellerräume geführte Außenluft (4) in Räume (33 bis 38) des Gebäudes (1), vorzugsweise in oberirdische Räume (33 bis 38) des Gebäudes (1), geführt wird.

6. Verfahren nach einem der Ansprüche 1 bis *5,* ***dadurch gekennzeichnet, dass*** der Teil der Außenluft (4), welcher durch das Erdreich (50) geführt wird, in einem Bereich (29) wieder zusammengeführt wird.

7. Verfahren nach einem der Ansprüche 1 bis 6, ***dadurch gekennzeichnet, dass*** die aus dem unteren Bereich der Gebäudehülle in den oberen Bereich (24) des Gebäudes (1) geführte Außenluft (4) mit der in dem inneren Spalt (20, 21) der Gebäudehülle aufgestiegenen Außenluft (4) in dem Dachbereich (27) des Gebäudes (1) vermischt wird.

8. Verfahren nach einem der Ansprüche 1 bis 7, ***dadurch gekennzeichnet, dass*** Abluft (31, 40) aus den Räumen (33 bis 38) des Gebäudes (1) in den Dachbereich (27), insbesondere in den Firstbereich des Daches (7), geführt wird.

9. Verfahren nach einem der Ansprüche 1 bis 8, ***dadurch gekennzeichnet, dass*** die aus wenigstens einem Raum (33 bis 38) des Gebäudes (1) abgeleitete Abluft (31, 40) mit der in dem inneren Spalt (20, 21) nach oben aufsteigenden Außenluft (4) und/oder mit der aus dem unteren Bereich der Gebäudehülle in den oberen Bereich (24) des Gebäudes (1) geführten Außenluft (4) in dem Dachbereich (27) vermischt wird.

10. Verfahren nach einem der Ansprüche 1 bis 9, ***dadurch gekennzeichnet, dass*** die vermischte Luft (43) verdampferseitig von einer Wärmepumpe (42) aus dem Dachbereich (27) abgesaugt wird.

11. Verfahren nach einem der Ansprüche 1 bis 10, ***dadurch gekennzeichnet, dass*** sich 70 %, vorzugsweise mehr als 80 %, der durch die Wärmepumpe (41) zu entwärmenden Luft (42) aus durch die Gebäudehülle geführte Außenluft (4) zusammen setzt.

12. Verfahren nach einem der Ansprüche 1 bis 11, ***dadurch gekennzeichnet, dass*** die entwärmte Luft (44) vorzugsweise vollständig aus dem Gebäude (1) geführt wird.

13. Gebäude (1) mit einer Wärmepumpe (42), wobei die Wärmepumpe (42) zur Aufnahme von Außenluft (4) verdampferseitig eine Öffnung aufweist, ***dadurch gekennzeichnet, dass*** die verdampferseitige Öffnung der Wärmepumpe (42) in der Nähe eines Mischbereiches (27) angeordnet ist, wobei der Mischbereich (27) in dem Dachbereich (24) des Gebäudes (1) angeordnet ist.

14. Gebäude (1) nach Anspruch 13, ***dadurch gekennzeichnet, dass*** die Wärmepumpe (42) in dem Kellerbereich des Gebäudes (1) angeordnet ist.

15. Verwendung einer Wärmepumpe (42) zum Entwärmen von Außenluft (4) in einem Gebäude (1) mit einer Gebäudehülle, ***dadurch gekennzeichnet, dass*** der Wärmepumpe (42) die Außenluft (4) aus dem Dachbereich (27) des Gebäudes (1) zugeführt wird.

16. Verfahren nach einem der Ansprüche 1 bis 12 und/oder nach Anspruch 15, ***dadurch gekennzeichnet, dass*** die Außenluftführung im Sommer, vorzugsweise während der Nacht, zur Entwärmung des oberirdischen Teils des Gebäudes (1) genutzt wird.

17. Verfahren zum Temperieren eines Gebäudes (1) mit einem Temperierungssystem (46), welches aus einem Rohrnetzwerk (47) besteht, das vorzugsweise aus Rohren (48) mit einem geringen Innendurchmesser besteht, durch welche eine Flüssigkeit, vorzugsweise Wasser, geführt wird, und mit einer Wärmepumpe (42), vorzugsweise mit einer Luft-Wasser-Wärmepumpe (42), wobei der Wärmepumpe (42) Luft (43) zugeführt wird, ***dadurch gekennzeichnet, dass*** die der Wärmepumpe (42) zugeführte Luft (43) gemäß einem der Patentansprüche 1 bis 12 geführt wird.
